# Europäisches Patentamt

# European Patent Office

# Office européen des brevets

(11) Numéro de publication: **0 171 106**
**B1**

(12) # FASCICULE DE BREVET EUROPÉEN

(45) Date de publication du fascicule du brevet:
**18.05.88**

(51) Int. Cl.⁴: **C 07 C 85/26,** C 01 D 7/16

(21) Numéro de dépôt: **85201090.9**

(22) Date de dépôt: **05.07.85**

(54) **Procédé pour l'obtention d'une base organique azotée insoluble dans l'eau, au départ d'un chlorhydrate hydrosoluble de ladite base et procédé de fabrication de bicarbonate de sodium.**

(30) Priorité: **17.07.84 FR 8411425**

(43) Date de publication de la demande:
**12.02.86 Bulletin 86/7**

(45) Mention de la délivrance du brevet:
**18.05.88 Bulletin 88/20**

(84) Etats contractants désignés:
**AT BE CH DE FR GB IT LI NL SE**

(56) Documents cité:
**GB-A-1 062 436**

(73) Titulaire: **SOLVAY & Cie (Société Anonyme), Rue du Prince Albert, 33, B-1050 Bruxelles (BE)**

(72) Inventeur: **Ninane, Léon, Rue Laennec, 1, F-54110 Dombasle- sur- Meurthe (FR)**
Inventeur: **Breton, Claude, Rue Pierre Breton, 5, F-54110 Dombasle- sur- Meurthe (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

L'invention est relative à un procédé pour l'obtention d'une base organique azotée insoluble dans l'eau, par exemple une amine, au départ d'un chlorhydrate de ladite base. Elle concerne plus particulièrement un tel procédé dans lequel le chlorhydrate de la base organique à produire est hydrosoluble.

On connaît une technique pour la fabrication de bicarbonate de potassium ou de sodium selon laquelle on mélange une solution aqueuse de chlorure de potassium ou de sodium et une solution organique d'une amine insoluble dans l'eau, on traite le mélange résultant avec un gaz contenant de l'anhydride carbonique, puis le soumet à une décantation pour séparer une suspension aqueuse de bicarbonate de potassium ou de sodium, que l'on recueille, et une solution organique de chlorhydrate d'amine (brevet GB-A-1 082 436 (KAISER ALUMINUM & CHEMICAL CORPOARTION), page 2, lignes 105 à 125; brevet IL-A-33 551 (IMI (TAMI) INSTITUTE FOR RESEARCH AND DEVELOP-MENT); Central Patents Index, Basic Abstracts Journal, Section E, Week T.49, Derwent Publication Ltd., Londres, abrégé 78430T-E demande de brevet JP-A-7 241 237 (Israël Mining Inds. Inst. Res. & Dev.)).

Dans la suite de la description, l'expression "technique aux amines" désignera cette technique connue de fabrication de bicarbonate de potassium ou de sodium.

On connaît par ailleurs une technique pour la production d'ammoniac par décomposition de chlorure d'ammonium, selon laquelle on mélange une solution aqueuse de chlorure d'ammonium avec une solution organique d'une amine insoluble dans l'eau et on fait circuler un gaz inerte ou de l'anhydride carbonique à travers le mélange résultant pour en évacuer l'ammoniac produit (Central Patents Index, Basic Abstracts Journal, Section E, Week E/14, Derwent Publication Ltd, Londres (Grande-Bretagne), abrégé 26992E/14: demande de brevet JP-A-57 034 020 (TOYO SODA MFG K.K.)).

Dans les techniques connues qui viennent d'être décrites, on recueille, à titre de sous-produit, une solution organique de chlorhydrate d'amine qu'il est souhaitable de traiter pour régénérer l'amine. A cet effet, on met habituellement en oeuvre un procédé de régénération de l'amine, selon lequel on mélange la solution organique de chlorhydrate d'amine avec une suspension aqueuse d'hydroxyde de calcium ou de magnésium, et on recueille séparément une solution organique de l'amine régénérée et une solution aqueuse de chlorure de calcium ou de magnésium que l'on écarte (brevet GB-A-1 082 436 (KAISER ALUMINUM & CHEMICAL CORPOPATION), page 3, lignes 5 à 9; brevet IL-A-33 551 (IMI (TAMI) INSTTITUTE FOR RESEARCH AND DEVELOPMENT), page 8, exemple 4; Central Patents Index, Basic Abstracts Journal, Section E, Week T.49, Derwent Publication Ltd, Londres, abrégé 78430T-E:

demande de brevet JP-A-7 241 237 (Israël Mining Inds. Inst. Res. & Dev.)).

La solubilité du chlorhydrate d'amine dans l'eau est rarement négligeable; dans le cas de la triéthylamine et des alkylamines primaires contenant moins de 18 atomes de carbone dans leur molécule (telle que celle connue sous la marque PRIMENE 81R (Rohm & Haas) qui contient environ 12 à 14 atomes de carbone dans sa molécule), le chlorhydrate correspondant est franchement hydrosoluble. Dans le procédé précité pour la régénération de l'amine, il est dès lors nécessaire de mettre en oeuvre une quantité importante d'hydroxyde de calcium ou de magnésium, généralement supérieure à la quantité stoechiométrique nécessaire pour décomposer la totalité du chlorhydrate d'amine de la solution organique. Le volume des liquides traités, principalement celui de la suspension aqueuse d'hydroxyde de calcium ou de magnésium, est de ce fait important, ce qui engendre des difficultés et constitue un désavantage. Il en résulte en particulier des difficultés dans la réalisation d'une suspension aqueuse homogène, dans l'exécution du mélange de celle-ci avec la solution organique de chlorhydrate d'amine et dans la séparation de la solution organique d'amine régénérée, de la solution aqueuse de chlorure de calcium ou de magnésium et des résidus solides provenant de l'excès d'hydroxyde de calcium ou de magnésium et des impuretés solides accompagnant ces hydroxydes.

L'invention remédie à ces difficultés en fournissant un procédé pour la régénération d'une base organique azotée insoluble dans l'eau, au départ d'un chlorhydrate hydrosoluble de ladite base, dans lequel le volume des liquides en présence est réduit et la quantité des résidus solides susdits est fortement réduite, voire supprimée.

En conséquence, l'invention concerne un procédé pour l'obtention d'une base organique azotée insoluble dans l'eau au départ d'un chlorhydrate hydrosoluble de ladite base, selon lequel on traite le chlorhydrate avec de l'eau et un agent basique capable de le décomposer pour former une phase organique comprenant la base organique azotée et une phase aqueuse séparable de la phase organique par décantation, et on recueille la phase organique, caractérisé en ce qu' on met en oeuvre une quantité d'agent basique, qui est déficitaire par rapport à celle nécessaire pour décomposer la totalité de chlorhydrate, et on traite la phase aqueuse avec un complément d'agent basique.

Dans le procédé selon l'invention, la base organique azotée est, par définition, tout réactif organique azoté qui est insoluble dans l'eau et qui présente un caractère basique suffisant pour réagir avec le chlorure d'hydrogène en formant du chlorhydrate de la base, le dit chlorhydrate étant hydrosoluble. On entend par l'expression "insoluble dans l'eau", que la solubilité de la base organique azotée dans l'eau n'excède pas 2 % en poids de solution, de préférence 1 %. Par l'expression "hydrosoluble", on entend que le chlorhydrate de la base organique azotée est capable de former des solutions aqueuses contenant au moins 0,5 g de chlorhydrate de la base par kg, par exemple entre 1 et 100 g par kg.

L'agent basique a pour fonction de décomposer le chlorhydrate pour produire la base organique azotée. Il doit être choisi de telle sorte que les produits de sa réaction avec le chlorhydrate soient la base organique azotée et des composés immiscibles avec celle-ci.

L'eau est destinée à l'évacuation de ces composés immiscibles. Elle doit être mise en oeuvre en une quantité suffisante pour former avec ces composés une phase aqueuse qui se sépare facilement, par exemple par décantation, de la phase organique comprenant la base à produire.

On préfère, dans le procédé selon l'invention, sélectionner l'agent basique parmi ceux pour lesquels les composés immiscibles précités sont hydrosolubles et on met alors en oeuvre une quantité d'eau suffisante pour les dissoudre en totalité. Les agents basiques inorganiques conviennent spécialement bien, tels que les oxydes, les hydroxydes et les carbonates des métaux alcalins et alcalino-terreux. Parmi ceux-ci, l'hydroxyde de calcium et le carbonate de calcium ont la préférence.

Le mélange réactionnel recueilli à l'issue du traitement avec l'agent basique comprend deux phases immiscibles dont l'une est une phase organique comprenant la base organique azotée à produire et l'autre est une phase aqueuse. Pour séparer ces deux phases l'une de l'autre, on peut avantageusement faire usage d'une décantation par gravité ou par centrifugation.

Conformément à une première caractéristique du procédé selon l'invention, l'agent basique est mis en oeuvre en une quantité qui est déficitaire par rapport à celle nécessaire pour décomposer la totalité du chlorhydrate. De la sorte, la phase aqueuse recueillie à l'issue du traitement avec l'agent basique contient, à l'état dissous, une partie au moins du chlorhydrate non décomposé.

Conformément à la seconde caractéristique du procédé selon l'invention, on traite la phase aqueuse avec un complément d'agent basique, dont le rôle est de décomposer le chlorhydrate qu'elle contient. Le complément d'agent basique peut être toute base capable de décomposer le chlorhydrate en produisant la base organique azotée et des composés résiduaires non miscibles avec la base organique azotée. Il est de préférence sélectionné parmi les bases inorganiques fortes, spécialement celles dont le pH est au moins égal à 11, de préférence supérieur à 12. Des exemples de bases inorganiques convenant bien pour le complément d'agent basique sont les carbonates, les oxydes et les hydroxydes des métaux alcalins et les oxydes et les hydroxydes des métaux alcalino-terreux; les bases inorganiques hydrosolubles ont la préférence, tout spécialement l'oxyde et l'hydroxyde de sodium. Dans le cas où le complément d'agent basique sélectionné est une base inorganique hydrosoluble, celle-ci peut avantageusement être mise en oeuvre à l'état d'une solution aqueuse.

Dans le procédé selon l'invention, le déficit optimum à réaliser en agent basique dépend de divers facteurs, notamment de la nature et du volume de la base organique à produire, de la nature de l'agent basique, de la quantité d'eau mise en oeuvre et de la conception de l'installation. Il doit dès lors être déterminé dans chaque cas particulier en fonction des circonstances. En règle générale, il est opportun que la quantité pondérale d'agent basique mise en oeuvre soit comprise entre 50 et 98 % du poids strictement nécessaire pour décomposer la totalité du chlorhydrate. Les quantités pondérales comprises entre 60 et 90 % de ce poids conviennent habituellement bien; celles comprises entre 70 et 85 % sont préférées.

Le complément d'agent basique est mis en oeuvre en quantité suffisante pour décomposer la majeure partie et, de préférence, la totalité du chlorhydrate de la phase aqueuse.

A l'issue du traitement de la phase aqueuse avec le complément d'agent basique, on sépare de celle-ci la base organique azotée formée. Cette séparation peut habituellement être effectuée sans difficulté au moyen d'une décantation par gravité ou par centrifugation.

Dans une forme de réalisation particulière du procédé selon l'invention, on dilue la base organique azotée dans un solvant pour faciliter sa récupération par décantation. Le choix de la nature et de la quantité de solvant à mettre en oeuvre est conditionné par la nécessité qu'il forme, avec la base organique azotée, une solution dont la viscosité ne fasse pas obstacle à une décantation efficace. A cet effet, on choisit de préférence un solvant organique qui, à la température de travail, a une viscosité qui n'excède pas 3 centipoises et de préférence 1 centipoise. Par ailleurs, pour des considérations de sécurité et de facilité d'emploi, on donne la préférence aux solvants organiques peu volatiles, ayant un point d'éclair supérieur à la température de travail. Le choix du solvant organique peut aussi être conditionné par la destination de la base organique azotée. Par exemple, lorsqu'on cherche à produire une solution organique d'amine pour la fabrication de bicarbonate de sodium par la technique aux amines décrite plus haut, il est souhaitable de choisir un solvant organique qui, en plus des propriétés citées plus haut, possède une grande vitesse d'absorption de l'anhydride carbonique à température modérée, généralement inférieure à 100°C et plus particulièrement comprise entre 15 et 70°C.

On utilise de préférence un solvant organique pour lequel la solution organique contenant la base organique azotée ait un poids spécifique inférieur à celui de la phase aqueuse. On choisit avantageusement un solvant tel que la différence entre le poids spécifique de la phase aqueuse et celui de la solution organique soit au moins égale à 5 % du poids spécifique de ladite solution organique, et de préférence supérieure à 30 % de ce poids spécifique.

Pour des considérations de nature économique, le procédé selon l'invention est de préférence exécuté à basse température, généralement à une température inférieure à 60°C, de préférence comprise entre 15 et 40°C. Dans ce cas, le solvant organique peut être avantageusement sélectionné parmi les hydrocarbures, en quantité réglée pour que la solution organique contienne environ 25 à 75 % en poids de base organique azotée. Des exemples de solvants organiques utilisables dans le cadre de l'invention sont le xylène, les butylbenzènes, les méthyléthylbenzènes et plus spécialement le white spirit et les solvants du commerce connus sous les marques ISOPAR (Esso) qui est un mélange d'isoparaffines, SOLVESSO (Esso) qui est un mélange de composés aromatiques, SHELLSOL AB (Shell) qui est un mélange de composés aromatiques et SHELLSOL K qui est un mélange de composés aliphatiques.

Dans cette forme de réalisation du procédé selon l'invention, le solvant organique doit généralement être introduit en deux étapes successives. Dans une première étape, il est introduit avant la séparation des phases aqueuse et organique, qui fait suite au traitement avec l'agent basique; dans la seconde étape, il est mélangé à la phase aqueuse séparée de la phase organique.

Le procédé selon l'invention s'applique, d'une manière générale, à toutes les bases organiques azotées qui sont insolubles dans l'eau, comme défini plus haut, et qui sont capables de former avec le chlorure d'hydrogène, des chlorhydrates organiques solubles dans l'eau; il s'applique particulièrement bien à l'obtention de bases organiques azotées dont la solubilité dans l'eau n'excède pas 0,5 %, en poids, et tout spécialement à celles dont la solubilité dans l'eau est inférieure à 0,05 % en poids. Il s'applique par exemples aux imines et leurs dérivés, aux sels d'ammonium quaternaire et aux amines et leurs dérivés. Le procédé selon l'invention est applicable indifféremment à la fabrication d'amines primaires, secondaires ou tertiaires. Il trouve une application spécialement avantageuse pour la production d'amines primaires et tout spécialement d'alkylamines primaires comprenant de 7 à 18 (de préférence 12 à 14) atomes de carbone, qui trouvent une utilisation intéressante dans la fabrication de bicarbonate de sodium par la technique aux amines décrite plus haut. A cet effet, le procédé selon l'invention peut avantageusement être combiné à ladite technique aux amines, où il est alors mis en oeuvre pour régénérer la solution organique d'amine.

L'invention concerne dès lors aussi un procédé pour la fabrication de bicarbonate de sodium, selon lequel on forme un mélange avec une solution aqueuse de chlorure de sodium et une solution organique d'une amine insoluble dans l'eau, on traite le mélange résultant avec un gaz contenant de l'anhydride carbonique pour former une suspension aqueuse de bicarbonate de sodium et une solution organique de chlorhydrate d'amine, on traite la suspension aqueuse de bicarbonate de sodium pour séparer le bicarbonate de sodium solide qu'elle contient et une eau mère, on traite la solution organique de chlorhydrate d'amine avec de l'eau et un agent basique capable de décomposer le chlorhydrate, on sépare du milieu réactionnel résultant une phase aqueuse et une phase organique d'amine et on recycle la phase organique dans le mélange précité; suivant l'invention, on met en oeuvre une quantité d'agent basique qui est déficitaire par rapport à celle nécessaire pour décomposer la totalité du chlorhydrate de la solution organique de chlorhydrate d'amine, on traite la phase aqueuse avec un complément d'agent basique, on recueille l'amine qui en résulte et on la recycle dans le mélange précité.

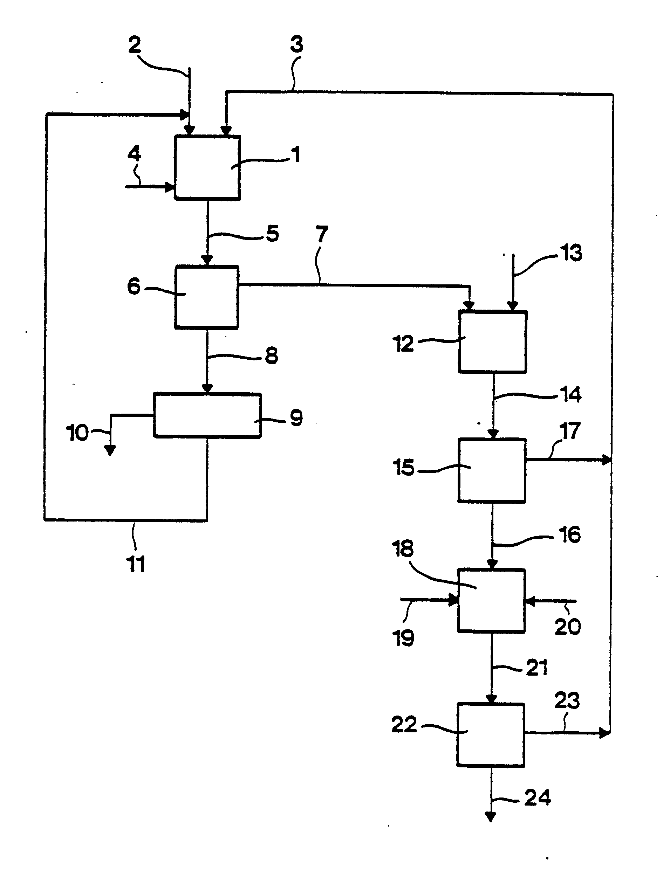

Des particularités et détails de l'invention ressortiront de la description suivante de la figure unique du dessin annexé, qui représente le schéma général d'une installation pour la fabrication de bicarbonate de sodium par la technique aux amines décrite plus haut, qui incorpore une forme de réalisation préférée du procédé selon l'invention.

L'installation représentée à la figure comprend une chambre de cristallisation 1 qui est alimentée, de manière continue, avec une solution aqueuse sensiblement saturée de chlorure de sodium 2, une solution organique d'amine primaire 3 insoluble dans la solution aqueuse de chlorure de sodium et un gaz contenant de l'anhydride carbonique 4. La solution organique d'amine primaire peut par exemple être une solution à 50 % en poids dans du xylène, de l'amine PRIMENE 81R (Rohm & Haas), qui est une alkylamine primaire comprenant entre 12 et 14 atomes de carbone dans sa molécule. Le gaz 4 est de préférence un gaz enrichi, contenant 60 à 80 % en poids d'anhydride carbonique, obtenu par exemple en mélangeant en proportions adéquates un gaz de four à chaux avec un gaz résiduaire de la calcination du bicarbonate de sodium en monocarbonate de sodium. La quantité de gaz mise en oeuvre doit être suffisante pour convertir une partie substantielle du chlorure de sodium de la solution 2 en bicarbonate de sodium. En variante, on peut faire précéder le traitement dans la chambre de cristallisation 1 par une carbonatation partielle du mélange au moyen d'un gaz pauvre en anhydride carbonique, tel qu'un gaz de four à chaux.

On soutire de la chambre de cristallisation 1, un liquide 5 constitué d'un mélange de solution aqueuse et de solution organique et contenant des cristaux de bicarbonate de sodium en suspension. Ce liquide 5 est transféré dans une

chambre de décantation 6, où on sépare, par gravité, une solution organique de chlorhydrate d'amine 7 et un brouet aqueux 8 de cristaux de bicarbonate de sodium. Ce dernier est envoyé dans un dispositif d'essorage ou de filtration 9, où on recueille séparément du bicarbonate de sodium solide 10 et une eau mère 11. Celle-ci est saturée en bicarbonate de sodium; elle peut avantageusement être recyclée dans la chambre de cristallisation 1.

La solution organique de chlorhydrate d'amine 7 est envoyée dans une chambre de réaction 12 où on la soumet à un brassage avec une suspension aqueuse d'hydroxyde de calcium 13 et le mélange résultant 14 est envoyé dans une chambre de décantation 15, de laquelle on recueille séparément, d'une part, une solution organique d'amine 17 que l'on recycle dans la chambre de cristallisation 1 et, d'autre part, un liquide résiduaire 16 comprenant une solution aqueuse de chlorure de calcium.

Selon l'invention, la suspension aqueuse d'hydroxyde de calcium 13 est mise en oeuvre en quantité déficitaire par rapport à celle qui est nécessaire pour décomposer la totalité du chlorhydrate d'amine contenu dans la solution organique 1. Le liquide résiduaire 16 contient de la sorte du chlorhydrate d'amine dissous. On l'envoie dans une chambre de réaction 18, où on le mélange avec une solution aqueuse d'hydroxyde de sodium 19 et avec un solvant organique 20. Le mélange réactionnel 21 est envoyé dans une chambre de décantation 22, de laquelle on recueille séparément, d'une part, une solution organique d'amine 23 que l'on recycle dans la chambre de cristallisation 1 et, d'autre part, un liquide résiduaire 24 que l'on écarte.

Dans le procédé qui vient d'être décrit, en référence au dessin, la solution aqueuse d'hydroxyde de sodium est de préférence mise en oeuvre en une quantité suffisante pour décomposer la totalité du chlorhydrate d'amine contenu dans le liquide 16. Elle consiste avantageusement en une solution aqueuse contenant entre 30 et 60 % en poids d'hydroxyde de sodium, obtenue par électrolyse d'une solution aqueuse de chlorure de sodium dans une cellule d'électrolyse à mercure ou à membrane à perméabilité sélective. En variante, elle peut aussi consister en une solution aqueuse contenant entre 10 et 20 % en poids d'hydroxyde de sodium et entre 10 et 20 % de chlorure de sodium, obtenue par électrolyse d'une solution aqueuse de chlorure de sodium dans une cellule à diaphragme.

Le solvant organique 20 a pour fonction de dissoudre l'amine formée dans la chambre de réaction 18. Il est choisi identique à celui de la solution organique d'amine 3.

L'exemple suivant va servir à expliciter l'invention.

On a mis en oeuvre une solution aqueuse de chlorure de calcium contenant 150 g de chlorure de calcium par kg et saturée en chlorhydrate de l'amine "PRIMENE 81R" (Rohm & Haas). Cette solution contenait ainsi, par kg, 2,1 g de carbone apportés par le chlorhydrate d'amine.

On a mélangé 49,7 g de ladite solution avec 1,06 cm$^3$ d'une solution normale d'hydroxyde de sodium, puis on y a ajouté 5 g du solvant organique "SHELLSOL K" (Shell). Après homogénéisation, on a laissé décanter le mélange pendant 24 heures, on a recueilli la phase aqueuse et on a mesuré sa teneur résiduelle en amine, par dosage du carbone: on a relevé une teneur de 0,034 g de carbone par kg de phase aqueuse.

On observe que la perte en amine dans la phase aqueuse est négligeable.

**Revendications**

1. Procédé pour l'obtention d'une base organique azotée insoluble dans l'eau au départ d'un chlorhydrate hydrosoluble de ladite base, selon lequel on traite le chlorhydrate avec de l'eau et un agent basique capable de le décomposer, pour former une phase organique comprenant la base organique azotée et une phase aqueuse séparable de la phase organique par décantation, et on recueille la phase organique, caractérisé en ce qu'on met en oeuvre une quantité d'agent basique, qui est déficitaire par rapport à celle nécessaire pour décomposer la totalité du chlorhydrate, et on traite la phase aqueuse avec un complément d'agent basique.

2. Procédé selon la revendication 1, caractérisé en ce que le complément d'agent basique est mis en oeuvre en quantité suffisante pour décomposer la totalité du chlorhydrate de la phase aqueuse.

3. Procédé selon la revendication 1 ou 2, caractérisé en ce qu'on sélectionne un agent basique qui est inorganique et un complément d'agent basique qui est inorganique et hydrosoluble.

4. Procédé selon la revendication 3, caractérisé en ce qu'on sélectionne l'agent basique parmi les oxydes, les hydroxydes et les carbonates des métaux alcalino-terreux et on sélectionne le complément d'agent basique parmi les oxydes et les hydroxydes des métaux alcalins.

5. Procédé selon la revendication 4, caractérisé en ce que l'agent basique et l'eau sont mis en oeuvre à l'état d'une suspension aqueuse d'hydroxyde ou de carbonate de calcium et le complément d'agent basique est mis en oeuvre à l'état d'une solution aqueuse d'hydroxyde de sodium.

6. Procédé selon l'une quelconque des revendications 1 à 5, caractérisé en ce qu'après avoir traité la phase aqueuse avec le complément d'agent basique, on la soumet à une décantation.

7. Procédé selon la revendication 6, caractérisé en ce qu'avant la décantation, on ajoute à la phase aqueuse, un solvant organique de la base organique azotée.

8. Procédé selon l'une quelconque des revendications 1 à 7, caractérisé en ce qu'il est appliqué à l'obtention d'une amine.

9. Procédé selon la revendication 8, caractérisé en ce qu'il est appliqué à l'obtention d'une alkylamine primaire comprenant entre 12 et 14 atomes de carbone dans sa molécule.

10. Procédé de fabrication de bicarbonate de sodium, selon lequel on forme un mélange (1) avec une solution aqueuse de chlorure de sodium (2) et une solution organique d'une amine insoluble dans l'eau (3), on traite le mélange résultant avec un gaz (4) contenant de l'anhydride carbonique pour former une suspension aqueuse de bicarbonate de sodium (8) et une solution organique de chlorhydrate d'amine (7), on traite la suspension aqueuse de bicarbonate de sodium (8) pour séparer le bicarbonate de sodium solide (10) qu'elle contient et une eau mère (11), on traite la solution organique de chlorhydrate d'amine (7) avec de l'eau et un agent basique (I3) capable de décomposer le chlorhydrate, on sépare du milieu réactionnel résultant (14) une phase aqueuse (16) et une phase organique d'amine (17) et on recycle la phase organique (17) dans le mélange précité (1), caractérisé en ce qu'on met en oeuvre une quantité d'agent basique (I3) qui est déficitaire par rapport à celle nécessaire pour décomposer la totalité du chlorhydrate de la solution organique de chlorhydrate d'amine (7), on traite la phase aqueuse (16) avec un complément d'agent basique (19), on recueille l'amine (23) qui en résulte et on la recycle dans le mélange précité (1).

**Patentansprüche**

1. Verfahren zur Herstellung einer wasserunlöslichen organischen Stickstoffbase ausgehend von einem wasserlöslichen Chlorhydrat dieser Base, wonach man das Chlorhydrat mit Wasser und einem basischem Mittel behandelt, welches in der Lage ist, dieses zu zersetzen, zur Bildung einer organischen Phase umfassend die organische Stickstoffbase und einer wäßrigen Phase, die von der organischen Phase durch Dekantieren trennbar ist, und man die organische Phase sammelt, dadurch gekennzeichnet, daß man eine Menge an basischem Mittel einsetzt, die geringer ist als die, die notwendig ist, um das gesamte Chlorhydrat zu zersetzen und man die wäßrige Phase mit dem Rest des basischen Mittels behandelt.

2. Verfahren nach Anspruch 1, dadurch gekennzeichnet, daß der Rest des basischen Mittels eingesetzt wird in einer Menge, die ausreichend ist, um das gesamte Chlorhydrat der wäßrigen Phase zu zersetzen.

3. Verfahren nach Anspruch 1 oder 2, dadurch gekennzeichnet, daß man ein basisches Mittel auswählt, welches anorganisch ist und einen Rest des basischen Mittels, welcher anorganisch und wasserlöslich ist.

4. Verfahren nach Anspruch 3, dadurch gekennzeichnet, daß man das basische Mittel auswählt unter den Oxiden, Hydroxiden und Carbonaten der Erdalkalimetalle und daß man den Rest des basischen Mittels auswählt unter den Oxiden und den Hydroxiden der Alkalimetalle.

5. Verfahren nach Anspruch 4, dadurch gekennzeichnet, daß das basische Mittel und das Wasser eingesetzt werden im Zustand einer wäßrigen Suspension von Calciumhydroxid oder -carbonat und der Rest des basischen Mittels im Zustand einer wäßrigen Lösung von Natriumhydroxid.

6. Verfahren nach einem der Ansprüche 1 bis 5, dadurch gekennzeichnet, daß nach Behandlung der wäßrigen Phase mit dem Rest des basischen Mittels man diese dekantiert.

7. Verfahren nach Anspruch 6, dadurch gekennzeichnet, daß vor dem Dekantieren man zu der wäßrigen Phase ein organisches Lösungsmittel für die organische Stickstoffbase zusetzt.

8. Verfahren nach einem der Ansprüche 1 bis 7, dadurch gekennzeichnet, daß es angewandt wird zur Herstellung eines Amins.

9. Verfahren nach Anspruch 8, dadurch gekennzeichnet, daß es angewandt wird zur Herstellung eines primären Alkylamins enthaltend 12 bis 14 Kohlenstoffatome im Molekül.

10. Verfahren zur Herstellung von Natriumbicarbonat, wonach man eine Mischung (1) bildet mit einer wäßrigen Lösung von Natriumchlorid (2) und einer organischen Lösung eines wasserunlöslichen Amins (3) und man die resultierende Mischung mit einem Gas (4) behandelt, welches Kohlendioxid enthält zur Bildung einer wäßrigen Suspension von Natriumbicarbonat (8) und einer organischen Lösung von Aminchlorhydrat (7), man die wäßrige Suspension von Natriumbicarbonat (8) behandelt, um das feste Natriumbicarbonat (10), welches sie enthält, abzutrennen von der Mutterlauge (11), man die organische Lösung des Aminchlorhydrats (7) mit Wasser behandelt sowie einem basischen Mittel (13), welches in der Lage ist, Chlorhydrat zu zersetzen, man von dem entstehenden Reaktions milieu (14) eine wäßrige Phase (16) und eine organische Phase des Amins (17) abtrennt und man die organische Phase (17) im Kreislauf zurückführt in die vorerwähnte Mischung (1), dadurch gekennzeichnet, daß man eine Menge an basischem Mittel (13) einsetzt, die ungenügend ist, um das gesamte Chlorhydrat der organischen Lösung des Aminchlorhydrats (7) zu zersetzen, man die wäßrige Phase (16) mit einem Rest des basischen Mittels (19) behandelt, man das entstehende Amin (23) sammelt und dieses in die vorerwähnte Mischung (1) zurückführt.

## Claims

1. Process for the production of a water-insoluble nitrogenous organic base, starting from a water-soluble hydrochloride of the said base, according to which the hydrochloride is treated with water and a basic agent capable of decomposing it, to form an organic phase including the nitrogenous organic base and an aqueous phase capable of being separated from the organic phase by gravity separation, and the organic phase is collected, characterized in that use is made of a quantity of basic agent which is deficient relative to that required to decompose all of the hydrochloride, and the aqueous phase is treated with a complement of basic agent.

2. Process according to Claim 1, characterized in that the complement of basic agent is used in a quantity which is sufficient to decompose all of the hydrochloride in the aqueous phase.

3. Process according to Claim 1 or 2, characterized in that a basic agent which is inorganic and a complement of basic agent which is inorganic and watersoluble, are chosen.

4. Process according to Claim 3, characterized in that the basic agent is chosen from alkaline-earth metal oxides, hydroxides and carbonates, and the complement of basic agent is chosen from alkali metal oxides and hydroxides.

5. Process according to Claim 4, characterized in that the basic agent and water are employed in the form of an aqueous suspension of calcium hydroxide or carbonate and the complement of basic agent is employed in the form of an aqueous solution of sodium hydroxide.

6. Process according to any one of Claims 1 to 5, characterized in that after the aqueous phase has been treated with the complement of basic agent, it is subjected to a gravity separation.

7. Process according to Claim 6, characterized in that before the gravity separation, an organic solvent for the nitrogenous organic base is added to the aqueous phase.

8. Process according to any one of Claims 1 to 7, characterized in that it is applied to the production of an amine.

9. Process according to Claim 8, characterized in that it is applied to the production of a primary alkylamine containing between 12 and 14 carbon atoms in its molecule.

10. Process for the manufacture of sodium bicarbonate, according to which a mixture (1) is formed with an aqueous solution of sodium chloride (2) and an organic solution of a water-insoluble amine (3), the resultant mixture is treated with a gas (4) containing carbon dioxide to form an aqueous suspension of sodium bicarbonate (8) and an organic solution of amine hydrochloride (7), the aqueous suspension of sodium bicarbonate (8) is treated to separate off the solid sodium bicarbonate (10) which it contains and a mother liquor (11), the organic solution of amine hydrochloride (7) is treated with water and a basic agent (13) capable of decomposing the hydrochloride, an aqueous phase (16) and an organic amine phase (17) are separated off from the resultant reaction mixture (14) and the organic phase (17) is recycled to the abovementioned mixture (1), characterized in that use is made of a quantity of basic agent (13) which is deficient relative to that required to decompose all of the hydrochloride in the organic solution of amine hydrochloride (7), the aqueous phase (16) is treated with a complement of basic agent (19), and the amine (23) resulting therefrom is collected and is recycled to the abovementioned mixture (1).